# EUROPÄISCHE PATENTSCHRIFT

(11) **EP 2 603 728 B1**
(45) Veröffentlichungstag und Bekanntmachung des Hinweises auf die Patenterteilung: **30.11.2016**
(21) Anmeldenummer: 11801956.1
(22) Anmeldetag: 05.08.2011
(51) Int. Cl.: F16L 55/134, B29C 73/32

(54) **SYSTEM ZUR ABDICHTUNG EINES ROHRLEITUNGSSYSTEMS**
SYSTEM FOR SEALING A PIPELINE SYSTEM
SYSTÈME POUR ÉTANCHÉIFIER UN SYSTÈME DE CONDUITES

(30) Priorität: 12.08.2010 DE 202010011337 U
(43) Veröffentlichungstag der Anmeldung: 19.06.2013
(73) Patentinhaber: Rumailha - Comércio Internacional e Servicos LDA & Comandita, 9000-046 Funchal (PT)
(72) Erfinder: Bohnet, Hans, 75328 Schömberg/Langenbrand (DE); Eitel, Jens, 75323 Wildbad (DE)
(74) Vertreter: Straub, Bernd
(86) Internationale Anmeldenummer: PCT/DE2011/001554
(87) Internationale Veröffentlichungsnummer: WO 2012/019590

(56) Entgegenhaltungen:
- EP-A1- 0 014 878
- EP-A1- 1 334 344
- DE-A1- 4 243 714
- GB-A- 2 080 914
- US-A- 4 342 336
- US-A- 5 322 653

## Beschreibung

Die Erfindung betrifft ein System zur Abdichtung eines Rohrleitungssystems, das gerade zur Abdichtung von begehbaren Rohrsystemen, wie sie in Abwasserkanälen verwendet werden können, geeignet ist.

Es existieren verschiedene Techniken zu einer derartigen Abdichtung. Beispielsweise ist aus der DE 40 23 211 A1 bekannt, dass das Rohr von innen zuerst vollflächig mit einem Gewebe vollständig ausgekleidet wird und anschließend dieses Gewebe von der Innenseite des Rohres mit einem Schlauch versehen wird, der mit einem Fluid aufgefüllt wird, so dass das abzudichtende Rohr vollständig durch eine Doppelschicht aus Gewebe und gummiartigem Schlauch verkleidet wird und dadurch auch die undichte Stelle abgedichtet wird. Ein derartiges System erweist sich als sehr komplex und kostenintensiv in der Verwendung.

Weiterhin ist aus dem Deutschen Gebrauchsmuster G 85 01 676.4 bekannt, einen Spalt zwischen zwei Rohren dadurch abzudichten, dass eine Dichtmanschette in Form eines Spannbandes von der Innenseite an die aneinander stoßenden Rohrenden, die einen Spalt bilden, gepresst wird. Dabei ist das Spannband aus glasfaserverstärktem Kunststoff gebildet. Die Abdichtung erfolgt bei diesem System zwischen der Innenseite der Rohre und der Dichtmanschette, die über zwei Spannbänder fest an die Innenseite gepresst wird und dadurch den Spalt zwischen den Rohrenden abdichten. Dieses System erweist sich in der Anwendung als wenig flexibel und aufwändig.

Weiterhin ist aus dem Deutschen Gebrauchsmuster DE 295 190 73 U1 eine Dichtungsmanschette zum Einsetzen in Rohre zwecks Abdichtung von Leckstellen bekannt, die aus einem ringförmigen, zusammengebogenen, aufweitbaren Band aus Stahlblech besteht. Die Enden dieses Stahlblechs sollen sich überlappen und werden mittels einer Arretiervorrichtung in der Gestalt eines am innenliegenden Bandende in Umfangrichtung angeordneten Schlitzes, dessen Längskante eine Zahnreihe trägt, auseinander gespannt, was mit Hilfe eines Spannritzels so erfolgt, dass die Arretiervorrichtung das Band der Dichtungsinnenmanschette an die Innenseite der Rohrleitung presst und dadurch abdichtet. Dieses System erweist sich in der Handhabung als komplex und als sehr kostenintensiv.

Der Erfindung liegt die Aufgabe zugrunde, ein Verfahren und ein System zur Abdichtung eines Rohrleitungssystems anzugeben, welches eine verlässliche Abdichtung eines Rohrleitungssystems im Bereich aneinander stoßender Rohre ermöglicht und dabei einfach zu handhaben ist.

Diese Aufgabe wird durch ein Verfahren und ein System zur Abdichtung eines Rohrleitungssystems mit den Merkmalen des Anspruchs 1 bzw. 2 gelöst.

Vorteilhafte Weiterbildungen des Systems zur Abdichtung von Rohrleitungen sind Gegenstand der abhängigen Ansprüche.

Das erfindungsgemäße System zeigt einen fluiddichten Schlauch, der zur Einbringung in den Bereich des abzudichtenden Spaltes zwischen zwei Rohren des abzudichtenden Rohrleitungssystems eingebracht werden kann. Der Schlauch ist mit einem Zuführelement zum Einbringen eines Fluids versehen, mit dessen Hilfe der Schlauch aufgefüllt und dadurch in seinem Volumen vergrößert wird. Dieses Zuführelement enthält ein Ventil, das das Einbringen des Fluids, sei es in Form eines Gases oder insbesondere in Form einer Flüssigkeit wie insbesondere Wasser oder einem Öl, erleichtert und zugleich das Ausströmen über das Zuführelement verhindert. Dieses Ventil hat damit die Funktion eines Rückschlagventils. Für die Ausbildung dieses Ventils sind unterschiedlichste Möglichkeiten der Ausbildung bekannt und werden je nach Größe, Druckverhältnissen und verwendetem Fluid ausgewählt.

Dieses Zuführelement wird mit einer Pumpe zum Fördern des Fluids verbunden, nachdem der Schlauch in den Bereich des oder insbesondere in den abzudichtenden Spalt des Rohrleitungssystems eingebracht wurde. Der Schlauch wird somit im ungefüllten Zustand in den Spalt eingebracht, was die Einbringung besonders erleichtert. Ist der erfindungsgemäße Schlauch zur Abdichtung eines Rohrleitungssystems in den abzudichtenden Spalt eingebracht, wird über die Pumpe das Fluid über das Zuführelement in den Schlauch eingebracht, der Schlauch dehnt sich aus und passt sich dem Spalt an, dichtet diesen durch Anpressen insbesondere an die Seitenwand des Spaltes, d.h. die Enden der gegeneinander abzudichtenden Rohre, ab und stellt dadurch sicher, dass der abzudichtenden Spalt zwischen den Rohren verlässlich und sicher abgedichtet ist. Das Einbringen des noch nicht oder wenig gefüllten Schlauches ist wenig komplex und kann auch unter schwierigen Raumverhältnissen verlässlich realisiert werden. Das nachfolgende Auffüllen des Schlauches mittels des über die erfindungsgemäße Pumpe beförderten Fluids ist ebenso wenig komplex und bedarf keiner komplexen Vorrichtung oder eines umfangreichen Raumes, so dass die Anwendung dieses erfindungsgemäßen Systems zur Abdichtung eines Rohrleitungssystems im Bereich eines Spaltes zwischen zwei Rohren besonders einfach und sicher zu realisieren ist.

Das erfindungsgemäße System zeichnet sich damit dadurch aus, dass die Abdichtung der besonders kritischen Stellen zwischen zwei Rohren dadurch erfolgt, dass nicht die Innenseite der Rohre durch ein mehrere Komponenten enthaltendes breites Band abgedichtet wird, wie es im Stand der Technik ausgiebig beschrieben ist, sondern erfindungsgemäß insbesondere der Spalt als solches mit Hilfe eines fluidgefüllten Schlauches direkt abgedichtet wird, ohne dass eine komplizierte Vorrichtung den Innendurchmesser des abzudichtenden Rohres zwangsläufig erheblich oder deutlich einschränkt und damit den Durchfluss des durch die Rohre zu transportierenden Gutes beschränkt.

Durch dieses erfindungsgemäße System können auf besonders einfache Art und Weise Schädigungen oder Undichtigkeiten des Rohrleitungssystems beseitigt werden, die die häufigste Ursache für Undichtigkeiten darstellen, nämlich solche, die durch nicht perfektes Ausrichten der Rohre und damit durch Verkeilen der Rohrenden bzw. der Muffe der Rohrenden gegeneinander entstehen. Durch diese keilförmigen Öffnungen, die beim Verlegen der zum Teil mannshohen Röhren sehr schnell entstehen, sind Undichtigkeiten in größerer Zahl gegeben, die jede für sich ggfs. keine überragende Einzelundichtigkeit darstellt aber in Summe eine erhebliche Undichtigkeit des Rohrleitungssystems und damit Schädigung der Umwelt nach sich zieht. Das erfindungsgemäße System ist besonders geeignet, derartige Undichtigkeiten zu beseitigen und abzudichten. Die Anwendung ist aber nicht auf diese Art der Undichtigkeit begrenzt, sie kann auch bei größeren Spalten oder Rissen in einem Rohrleitungssystem effizient und wirkungsvoll angewendet werden. Das erfindungsgemäße System zur Abdichtung eines Rohrleitungssystems hat sich in der Handhabung und im Abdichtungserfolg besonders bewährt.

Es hat sich als besonders vorteilhaft erwiesen, den Schlauch aus einem Material zu wählen, beispielsweise aus Kautschuk bzw. einem kautschukarteigen Material, das durch Vulkanisieren eine sichere und feste und auch dichte Verbindung eingehen kann. Neben dem Verkleben hat sich das Vulkanisieren als besonders sichere und verlässliche, dichtende Art der Verbindung bewährt. In entsprechender Weise hat sich neben dem Vulkanisieren ein Verbinden durch Verschweißen bewährt, insbesondere wenn hierbei Materialen wie Polytetrafluorethylen (PTFE), Ethylenvinylacetat (EVA), Polyethylen (PE), Polyurethan (PUR) oder Polyamid (PA) zur Anwendung kommen. Durch diese Materialwahl und durch diese Art der Verbindung wird es erfindungsgemäß ermöglicht, einerseits den Schlauch bei Bedarf durch Aufbringen eines auf die Oberfläche des Schlauches aufgebrachten Zusatzelementes, das mit dem Schlauch verklebt bzw. vulkanisiert wird, sicher zu flicken und dadurch unerwünschte Undichtigkeiten des Schlauches zu beheben.

Auch ist es nach einer bevorzugten Ausbildung der Erfindung möglich, einen langerstreckten Schlauch zu einem geschlossenen Ring zu verbinden, indem die Enden miteinander verklebt und insbesondere erfindungsgemäß miteinander zu einem geschlossenen Ring vulkanisiert oder verschweißt werden. Dieser Ring kann dabei als durchgehend geschlossener Schlauch mit einer oder mehreren durchgehenden ringförmigen Kammern ausgebildet sein. Alternativ hierzu hat es sich auch bewährt, eines oder mehrere Endstücke des langerstreckten Schlauches als Endfläche ohne integrierte Luftkammer auszubilden. In diesem Fall wird diese Endfläche überlappend mit dem anderen Ende des Schlauches durch Vulkanisieren, Verschweißen oder auch durch Verkleben so verbunden, dass die Endfläche nach dem Verbinden im Bereich des mit einer oder mehreren Luftkammern versehenen Schlauchbereiches des anderen Endes zum Liegen kommt. Hierdurch ist eine vollumfängliche Ausbildung einer oder mehrerer Luftkammern im Schlauch sichergestellt, so dass eine besonders wirksame Abdichtung erreicht wird. Als besonders vorteilhaft hat sich die Ausbildung des Schlauches mit zwei derartigen Endflächen erwiesen.

Vorzugsweise wird der Schlauch im Wesentlichen aus einem Material gebildet, das durch Einbringen einer Gewebeeinlage verstärkt ist. Durch diese Verstärkung gelingt es, die Stabilität'und Steifigkeit des Schlauches merklich zu erhöhen und dadurch eine Beschädigung des Schlauches bei der Einbringung und im Betrieb merklich zu verringern. Dabei wird die Gewebeeinlage bevorzugt aus Textil- und/ oder aus einem Metallgewebe gebildet. Durch die Verwendung von Textilgewebe insbesondere unter Verwendung von Kohlefasern oder Kevlarfasern gelingt es eine ausreichende Flexibilität bei besonderer Stabilität und Widerstandsfähigkeit zu erreichen. Durch die Verwendung einer mehrschichtig ausgebildeten Gewebeeinlage gelingt es, diese Flexibilität und Beständigkeit insbesondere gegen mechanische oder chemische Belastung besonders auszubilden. Dabei werden bevorzugt die verschiedenen Schichten mit unterschiedlichen Materialien, unterschiedlichen Orientierungen und/oder unterschiedlichen Faserstärken realisiert und miteinander zu einem Gesamtgewebe für die Gewebeeinlage verbunden. Hierdurch lassen sich sehr spezifische, den verschiedenen Abdichtsituationen eines Rohrleitungssystems angepasste Schläuche realisieren. Gerade bei sehr dynamischen Rohrsituationen beispielsweise in Erdbebengebieten oder in Bereichen, in denen es zu Erschütterungen durch Verkehrsbewegungen z.B. durch U-Bahnen kommt, hat es sich bewährt, besonders robuste und somit mechanisch widerstandsfähige Gewebeeinlagen aus dünnen Metallgeweben zu verwenden, die zusätzlich durch eine ergänzende Schicht aus dünnen Textilgeweben ergänzt werden. Hierdurch ist eine sehr vorteilhafte Kombination aus mechanischer Steifigkeit und Widerstandskraft sowie flexible Beweglichkeit durch die mehrschichtige Anordnung aus Textil- und Metallgewebe erreicht.

Es hat sich besonders bewährt, das System zur Abdichtung eines Rohrleitungssystems gemäß der Erfindung mit einer Manschette, die insbesondere federnd ausgebildet ist, zu versehen. Diese Manschette ist so ausgebildet, dass sie in den Spalt zwischen den gegeneinander abzudichtenden Rohren einbringbar ist und dabei zwischen dem in den Spalt eingebrachten Schlauch und dem Innenraum des Rohrleitungssystems zu liegen kommt. Dabei ist die Manschette bevorzugt so ausgebildet, dass sie den mit Fluid gefülltem Schlauch in den Spaltrest oder zumindest teilweise an dem Schlauch im Spalt anliegt. Bevorzugt wird dabei die insbesondere federnde Manschette so ausgebildet und gewählt, dass die Manschette sich seitlich bis an die Enden der beiden Rohre erstreckt und damit den Spalt flächig bedeckt und dadurch den dahinter liegenden Schlauch vor mechanischen Beschädigungen durch die im Rohrleitungssystem geförderten Güter schützt. Dabei hat es sich besonders bewährt, die Manschette aus bogen- oder V-förmigem, federndem Stahl insbesondere V4A-Stahl oder Schiffsstahl auszubilden, der durch seine bogen- oder V-Form eine Flexibilität in Richtung der auseinanderstehenden Enden oder Schenkel des V aufweist und dadurch im in den Spalt eingebrachten Zustand an den Enden der Rohre über wesentliche Teile des ringförmigen Spaltes zum Liegen kommt bzw. kommen kann. Durch die bogen- oder V-förmige Ausbildung ist es darüber hinaus möglich, einen Federring in die Manschette einzubringen, die die Manschette nach außen in Richtung des Schlauches drückt. Hierdurch ist ein sehr sicherer Sitz der Manschette in dem Spalt gewährleistet und dabei durch die Wahl der geeigneten Materialien und des Federringes eine einfache und sichere Einbringung des Systems zur Abdichtung gewährleistet. Durch die besondere Form der insbesondere bogen- oder V-förmigen Manschette ist zudem eine besonders verlässliche Anordnung aus federnder Manschette und Schlauch erreicht.

Es hat sich als besonders vorteilhaft erwiesen, das erfindungsgemäße System mit einem Schlauch zu versehen, der nicht nur eine sondern mehrere sich über die Länge des Schlauches erstreckende Kammern aufweist, die fluidgefüllt werden und dadurch den Schlauch im Außenmaß erweitern und dadurch eine sichere Abdichtung im Bereich des Spaltes zwischen zwei Rohren erreichen. Durch die Ausbildung der verschiedenen Kammern lässt sich das Maß der Ausdehnung sehr verlässlich steuern und gerade im Fall einer Undichtigkeit einer Kammer diese ohne das Eindringen eines neuen Schlauches kompensieren. Bevorzugt wird dabei für jede separate Kammer ein eigenes Zuführelement mit Ventil zur Einbringung des Fluides zugeordnet. Hierdurch lassen sich die verschiedenen selektiv und situationsspezifisch füllen bzw. entleeren. Neben der Möglichkeit, die Kammern über die volle Länge des Schlauches sich erstrecken zu lassen, hat es sich auch bewährt, die Kammern sich nur teilweise überlappen zu lassen, so dass gerade besonders gefährdete Bereich durch zwei getrennte Kammern geschützt sind, während andere wenig betroffene Bereiche nur durch eine einzige Kammer geschützt sind, was aufgrund der gegebenen Dichtigkeit in diesem Bereich nicht von Nachteil ist. Diese Variante des Schlauches mit mehreren Kammern erweist sich in der Herstellung als einfach.

Es hat sich besonders bewährt, die gegeneinander abzudichtenden Rohre so auszubilden, dass die gegeneinander abzudichtenden Rohre eine Muffe bilden, deren inneres. Rohr ein Rohrende mit einer am Außendurchmesser angeordneten Phase zeigt. Durch diese Phase am Außendurchmesser des innenliegenden Rohrendes gelingt es, den erfindungsgemäßen Schlauch sehr tief und dauerhaft in den Spalt zwischen den beiden Rohrenden einzubringen, dort mit Fluid zu füllen und in diesem Bereich der Phase, die ein Herausrutschen Richtung Innenraum des Rohres verhindert, die Lage des Schlauches zu sichern. Durch diese Ausbildung des Systems mit daran angepassten Rohren ist ein vereinfacht zu handhabendes und in der Sicherheit verbessertes System zur Abdichtung eines entsprechenden Rohrleitungssystems gegeben.

Es hat sich besonders bewährt, die gegeneinander abzudichtenden Rohre so auszubilden, dass sie im zusammengebauten Zustand eine Glockenmuffe bilden, die mit einer Kunststoffdichtung zwischen der Glocke und dem durch die Glocke umschlossenen, zugeordneten anderen Rohrende angeordnet ist. Durch diese Dichtung ist eine Abdichtung des Rohrleitungssystems in radialer Richtung bezogen auf das Rohrleitungssystem gegeben, welche in Zusammenwirkung mit dem fluidgefüllten Schlauch des Systems eine sehr verlässliche und sichere Abdichtung des Rohrleitungssystems gewährleistet, da die radiale Abdichtung der Kunststoffdichtung in Verbindung mit der lateralen und radialen Abdichtung des Schlauches eine sehr wirkungsvolle Kombination an Abdichtungen bildet.

Das erfindungsgemäße System enthält darüber hinaus einen Schutzring, der inwändig im Bereich des mit dem erfindungsgemäßen Schlauch versehenen Rohrspaltes so angeordnet ist dass der Schutzring den Spalt mit dem Schlauch auf der Innenseite der beiden Rohrenden bedeckt und dadurch eine Behinderung oder Beschädigung des Schlauches durch vorbei gleitende, im Rohr geförderte Gegenstände, die scharfkantige Ecken enthalten können, verhindert. Vorzugsweise bedeckt dieser Schutzring den Spalt bzw. den Schlauch vollständig, so dass keine Gefährdung des im bzw. am Spalt angeordneten Schlauches gegeben ist. Vorzugsweise ist der Schutzring aus mehreren Segmenten gebildet, die miteinander zu dem Schutzring verbindbar sind. Dabei sind die Segmente so gewählt, dass die miteinander verbundenen, zu einem Schutzring zusammengefügten Segmente ein Schutzring mit einem Außendurchmesser entsprechend dem Innendurchmesser des abzudichtenden Ringspaltes aufweisen. Dadurch lässt sich der Schutzring im Bereich des abzudichtenden Rohrspaltes so anordnen, dass ein Hintergleiten des Schutzringes durch vorbeiströmende Gegenstände verhindert ist. Hierdurch ist ein vor Beschädigung gut gesichertes System zur Abdichtung eines Rohrleitungssystems geschaffen.

Vorzugsweise werden die Segmente des Schutzrings über einen oder mehrere verschiebliche Bolzen miteinander verbunden und damit zu dem Schutzring verbunden. Vorzugsweise werden benachbarte Segmente paarweise über einen verschieblichen Bolzen verbunden, wobei dieser Bolzen bevorzugt in einer Führung achsial so geführt sind, dass im verbundenen Zustand die Führung durch eine gemeinsame Führung an zwei verschiedenen Segmenten gebildet wird. Hierdurch ist die Zuordnung der Segmente zueinander in ihrer Position festgelegt und dadurch eine sehr verlässliche und sichere Bildung des gesamten Schutzrings aus mehreren derartig verbundenen Segmente auf besonders verlässliche und einfache Weise geschaffen. Durch diese Verwendung derartig zu verbindender Segmente ist eine besonders einfache Handhabung gegeben, da diese Segmente auch durch Engstellen gut zum Ort der Abdichtung gebracht werden können und dort aufgrund der beschränkten Ausmaße als Segment eines gesamten großen Schutzrings recht einfach zu handhaben sind. Die Verbindung über die gemeinsame Führung schafft eine besonders einfach zu handhabende und verlässliche Sicherung durch den Schutzring.

Darüber hinaus hat es sich besonders bewährt, den oder die Bolzen im verbundenen Zustand vor ungewolltem Öffnen zu sichern, was bevorzugt durch das Einbringen eines Splintes, das Anordnen einer Verklebung oder einer Drehsicherung oder Rutschsicherung durch Verklemmen oder Ändern der Oberfläche erreicht wird. Weitere Beispiele zur Sicherung vor einem ungewollten Lösen des Bolzens sind dem Fachmann aus dem Stand der Technik geläufig.

Vorzugsweise wird der Schutzring oder Segmente davon bzw. die Manschette so ausgebildet, dass er oder sie vorgespannt ist, d.h. dass sie im zusammengebauten Zustand eine Kraft radial nach außen bewirken und damit gegen die Innenseite der Rohre des Rohrleitungssystems aufbringen und dadurch eine Fixierung bewirken. Dies stellt zudem sicher, dass ein Hintergleiten durch vorbeigleitende, vorbeigeförderte Gegenstände im Rohrleitungssystems weitgehend ausgeschlossen ist. Durch diese Ausbildung mit Vorspannung gelingt es, die Einbringung der Manschette oder des Schutzringes zu vereinfachen, da diese beim Loslassen durch die Vorspannung eigenständig ein Anpressen der Manschette bzw. des Schutzringes an die Innenseite des Rohres bzw. in den Spalt und den darin befindlichen Gegenständen z.B. dem Schlauch erreichen. Die Vorspannung kann dabei durch den Schutzring, die Segmente oder die Manschette selbst oder durch einen zusätzlichen, integrierten Spannring oder durch ein Spannringsegment erreicht werden.

Vorzugsweise ist die Manschette und/oder der Schutzring im Wesentlichen aus Stahl insbesondere aus Schiffsstahl oder Edelstahl wie V4A-Stahl gebildet. Dieser Stahl erweist sich als sehr beständig auch unter schwierigen äußeren Bedingungen, so dass das System zur Abdichtung eines Rohrleitungssystems sehr dauerhaft funktionsfähig bleibt. Zudem erweist sich dieses Material als sehr formbeständig insbesondere auch als federnd, so dass die vorteilhaften Wirkungen in besonderem Maße gegeben sind. Neben der Verwendung von Stahl hat sich auch die Verwendung von Kohle- oder Glasfaserverstärkten Kunststoffen gerade im Hinblick auf deren Formsteifigkeit als besonders geeignet erwiesen.

Vorzugsweise wird als Fluid für das System zur Abdichtung eines Rohrleitungssystems ein inertes Gas bzw. eine nicht reaktive Flüssigkeit gewählt. Hierdurch ist sichergestellt, dass eine unerwünschte Explosion oder Beschädigung der Komponenten des Rohrleitungssystems oder auch des Systems zur Abdichtung nicht gegeben ist. Als inerte Gase haben sich besonders Stickstoff und Kohlendioxid erwiesen und als nicht reaktive Flüssigkeit hat sich Wasser insbesondere gereinigtes Wasser als besonders vorteilhaft herausgestellt, da dieses keine Ablagerungen bildet und keinen Alterungszuständen unterliegt. Durch die Verwendung gerade einer nicht reaktiven Flüssigkeit ist das Aufpumpen des erfindungsgemäßen Schlauches des erfindungsgemäßen Systems besonders effizient gegeben, da durch diese Flüssigkeit ein starker Druckanstieg erreicht werden kann, der eine schnelle und verlässliche Abdichtung ermöglicht. Unter besonders schwierigen Verhältnissen hat sich aber auch die Verwendung von inertem Gas besonders bewährt, da sich hier ein durch die Komprimierbarkeit des Gases bedingter langsamer Anstieg des Volumens des Schlauches ergibt, was eine Beschädigung der zu verbindenden Rohr z.B. durch Absplittung einzelner Bereiche besser verhindert. Durch die Verwendung dieser inerten Gase oder der nicht reaktiven Flüssigkeiten ist eine sehr wirkungsvolle Abdichtung, die dauerhaft beständig ist, erreicht.

Neben der erfindungsgemäßen Anordnung des Schlauches innerhalb des Spaltes, der abgedichtet werden soll, existiert zusätzlich auch die erfindungsgemäße Möglichkeit, den Schlauch so auszubilden, dass er zur inwändigen Anordnung im Bereich des Spaltes ausgebildet und vorgesehen ist, indem er bandförmig mit einer Breite größer als 10 cm ausgebildet ist. Wird dieser im Innern des abzudichtenden Rohrsystems mit Fluid gefüllt, so dehnt sich dieser bandförmige Schlauch mit einer Breite größer 10 cm im Radius aus, bis er die Innenwand des abzudichtenden Rohrsystems erreicht und sich bandförmig mit einer Breite von 10 cm oder mehr flächig in dem abzudichtenden Bereich anpresst und durch die Anpressung eine Abdichtung des abzudichtenden Bereiches, der insbesondere den Spalt zwischen zwei aneinander stoßenden Rohrenden bildet, sicherstellt. Durch diese Ausbildung des Schlauches ist ein universelles System zur Abdichtung eines Rohrleitungssystems gegeben, das über den typischen Fall der Abdichtung im Bereich der aneinander stoßenden Rohrenden auch Fälle abdichten kann, in denen ein Rohrstück des Rohrleitungssystems einen Riss oder ein Loch zwischen seinen Endstücken aufweist. Dieses erfindungsgemäße System zur Abdichtung erweist sich damit als besonders universell und einfach einsetzbar. Gerade in Verbindung mit einem Schutzring, der innenseitig den bandförmigen Schlauch vor Beschädigung schützt, ist auch ein sehr dauerhaftes und sicheres System gegeben.

Es hat sich darüber hinaus auch bewährt, den Schlauch so auszubilden, dass er mit einem Teil insbesondere mit einer Kammer in einen Spalt zwischen den Rohrenden eingebracht wird und mit einem anderen insbesondere bandförmigen Teil an der Innenseite der aneinander stoßenden Rohre, also im Bereich des Rohrspaltes, angeordnet ist. Dieser erfindungsgemäße Schlauch weist somit im Querschnitt eine T-förmige Gestalt auf. Durch diese Ausbildung des Schlauches ist eine besondere Abdichtung einerseits innerhalb des Spaltes und darüber hinaus an der Innenseite der Rohre im Bereich der abzudichtenden Rohrenden geschaffen, die gemeinsam eine besonders sichere Abdichtung gewährleisten. Diese Abdichtung erweist sich auch als sehr dauerhaft und verlässlich.

Die Einbringung des Schlauches in den abzudichtenden Bereich erweist sich auch als wenig kompliziert, da der Schlauch im leeren oder nicht vollaufgefüllten Zustand vollständig oder zumindest teilweise - also mit dem in den Spalt einzubringenden Teil des im Querschnitt T-förmigen Schlauches - eingebracht wird. Anschließend wird dann insbesondere wenn dieser Teil mit einer eigenen Kammer mit dem Fluid über ein eigenes Ventil geführt wird, gefüllt und insbesondere anschließend die andere oder die anderen Kammern des bandförmigen Teils des Schlauches für das Abdichten auf der Innenseite der Endbereiche der Rohre mit Fluid aufgefüllt. Durch diese schrittweise Handhabung ist eine besonders vorteilhafte, einfache, aber auch verlässliche und sichere Anordnung des Schlauches im abzudichtenden Bereich gegeben, was zu einer sehr sicheren und dauerhaften Abdichtung führt.

Vorzugsweise wird der Schutzring des Systems zur Abdichtung eines Rohrleitungssystems im Querschnitt wellenförmig ausgebildet, was sich sehr positiv auf die Stabilität des Schutzringes insbesondere bei vorgegebener Materialstärke auswirkt. Zusätzlich erweist sich der Schutzring durch die Wellenstruktur gerade bei segmentiertem Aufbau als einfach und sicher auch unter schwierigen äußeren Bedingungen zu verwenden.

Durch die bevorzugte wellenförmige Ausbildung des Schutzringes ist es auch möglich in die Wellentäler zu einem Ring verbundene mit einem Fluid füllbare ringförmige Körper anzuordnen und dadurch die Dichtigkeit des Systems und/oder die Stabilität des Ringes zu verbessern. Dabei wird der oder werden die ringförmigen Körper insbesondere als flexiblen Schlauch, als Ring mit quellfähigem Material oder als steifes Rohr ausgebildet. Durch die Anordnung der ringförmigen auf der Außenseite des Schutzringes kann in bevorzugter Weise eine besonders verlässliche Abdichtung des Systems erreicht werden. Hierbei hat sich die Verwendung von quellfähigem Material, das gerade in Verbindung mit Wasser, welches durch die Undichtigkeit zur Verfügung steht, zum Quellen angeregt wird. Besonders geeignet hierfür erweist sich das sogenannte Quellgummi. Durch die Einbringung von quellfähigem Material in einen flexiblen Schlauch gelingt es, eine besonders wirkungsvolle Anpassung an die Gegebenheiten zu erreichen. Das quellfähige Material wird dabei bevorzugt als kleinformatiges insbesondere als kieinkörniges Quellmaterial, in den Schlauch eingebracht, wo es angeregt durch ein Agens insbesondere in Form eines zugeführten Fluids zu einer Volumenerhöhung oder zu einer Viskositätserhöhung führen kann. Durch die Anordnung der ringförmigen Körper auf der Innenseite des Schutzringes kann in bevorzugter Weise eine besonders stabile und steife Schutzringanordnung erreicht werden und dadurch die Einsatzfähigkeit des erfindungsgemäßen Systems weiter erhöht werden.

Das erfindungsgemäße System in seinen verschiedenen Ausprägungen erweist sich in seiner Handhabung als besonders einfach. Darüber hinaus erweist es sich aber auch als sehr verlässliche und dauerhafte Abdichtung.

Im Folgenden wird das erfindungsgemäße System zur Abdichtung eines Rohrleitungssystems anhand der beispielhaft ausgewählten und in den Figuren dargestellten Beispiele näher erläutert.

Die Erfindung ist nicht auf die beispielhaft in den Zeichnungen dargestellten Ausführungsformen beschränkt.
- Fig. 1: zeigt in einem Längsschnitt einen Abschnitt eines Rohrleitungssystems, das mit dem erfindungsgemäßen System abgedichtet ist,
- Fig. 2: zeigt eine weitere beispielhafte Ausbildung des erfindungsgemäßen Systems in einem Längsschnitt eines Abschnittes eines abgedichteten Rohrleitungssystems,
- Fig. 3: zeigt in einer schematischen Darstellung den Aufbau eines beispielhaften erfindungsgemäßen Schlauchs und
- Fig. 4: zeigt im Querschnitt den Aufbau eines beispielhaften Schutzrings des erfindungsgemäßen Systems.

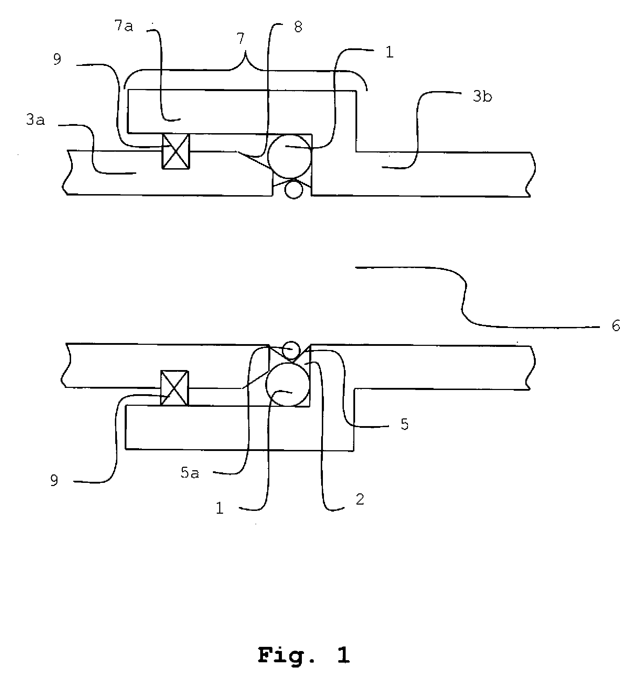

In Fig. 1 ist eine beispielhafte Ausbildung des erfindungsgemäßen Systems zur Abdichtung eines Rohrleitungssystems mit einem fluiddichten, gefüllten Schlauch dargestellt. Der erfindungsgemäße Schlauch 1 des erfindungsgemäßen Systems wurde zwischen den beiden Rohrenden 3a, 3b, die einen Spalt 2 bilden, in einem nicht fluidgefüllten Zustand eingebracht. Danach wurde der Schlauch 1 mit dem Fluid flüssiges Wasser aufgefüllt, wodurch er in seinem Durchmesser zunahm und sich an die Rohrenden 3a, 3b anlegte und den Spalt 2 abdichtete. Durch den fluidgefüllten Schlauch 1 ist der Innenraum 6 des Rohrleitungssystems gegen den Außenraum abgedichtet.

In Fig. 1 ist das Rohrleitungssystem ausschnittweise und das System zur Abdichtung des Rohrleitungssystems im fluidgefüllten und damit abgedichteten Zustand dargestellt. Das Rohrleitungsende 3a ist an seiner Außenseite mit einer Phase 8 ausgebildet und das andere Rohrleitungsende 3b ist so ausgebildet, dass es eine Glockenmuffe im Zusammenwirken mit den anderen Rohrleitungsende 3a bildet. Zwischen der Glocke 7a der Glockenmuffe 7 ist eine Kunststoffdichtung 9 angeordnet, die ein Abdichten der beiden Rohrenden gegeneinander in radialer Richtung ermöglicht. Diese Kunststoffdichtung 9 ist in eine umlaufende Nut auf der Außenseite des innenliegenden Rohrendes 3a eingebracht.

Beim Einbringen des Rohrendes 3a in die Glocke 7a entsteht nicht selten ein nicht gleichmäßiger Spalt 2 zwischen den Rohrleitungsenden 3a, 3b, der teilweise auch zu einer nicht dichten Abdichtung durch das Kunststoffdichtelement 9 führt. In diesem Fall wird die Abdichtung durch den erfindungsgemäßen, zu einem Ring geschlossenen Schlauch 1 erreicht. Dieser Schlauch 1 wird in den Spalt 2 des Bereichs der Glockenmuffe 7 eingebracht, indem durch die Phase 8 ein erweitertes ringförmiges Volumen gebildet ist, das einen größeren Freiraum zeigt, als der restliche Spalt 2 zwischen den Rohrenden 3a, 3b im Bereich der Glockenmuffe 7. Wird der Schlauch 1 nach der Einbringung in diesen erweiterten Bereich der Phase 8 mit Fluid gefüllt, so füllt er diesen Bereich immer weiter aus und durch diese Ausbildung ist ein Herausrutschen des fluidgefüllten Schlauches 1 aus diesem Raum in den restlichen verjüngten Spalt 2 ausgeschlossen, so dass eine verlässliche und dauerhafte Positionierung des Schlauches 1 zwischen den Rohrenden 3a, 3b gegeben ist. Der fluidgefüllte Schlauch 1 passt sich in seiner äußeren Form dem zur Verfügung stehenden, ringförmigen Volumen an und presst sich dichtend an die Wandungen in diesem Bereich. Hierdurch wird eine laterale und zusätzlich auch radiale Abdichtung durch den fluidgefüllten Schlauch 1 im Bereich der Glockenmuffe 7 erreicht. Hierdurch wird die eventuell bestehende Dichtwirkung der Kunststoffdichtung 9 so ergänzt, dass eine besonders verlässliche und dauerhafte Abdichtung gegeben ist. Das Einbringen des Schlauches 1 im nicht fluidgefüllten oder wenig fluidgefüllten Zustand ist einfach zu realisieren.

Nach der Füllung des Schlauches 1 mit dem Fluid wird eine Manschette 5 auf die Innenseite des Schlauches 1 in den Spalt 2 zwischen den beiden Rohrenden 3a, 3b eingebracht. Diese Manschette 5 ist V-förmig aus federndem V4A-Stahl realisiert. In die durch die V-förmige Manschette 5.gebildete Nut wird ein Spannring 5a eingebracht, der die Manschette radial nach außen spannt und damit gegen den Schlauch 1 presst und damit sicherstellt, dass der Schlauch 1 dauerhaft in dem Spalt zu liegen kommt. Die Manschette 5 liegt durch ihre federnde Ausbildung aus Stahl seitlich an den beiden Rohrenden 3a, 3b an, so dass sichergestellt ist, dass zwischen der Manschette 5 und den Rohrenden 3a, 3b keine Gegenstände hindurchtreten können und den Schlauch 1 beschädigen insbesondere undicht machen können. Durch die V-förmige Ausbildung wird die Manschette 5 federnd an die Rohrenden 3a, 3b gepresst und passt sich somit den äußeren Gegebenheiten und den Maßen des Spaltes 2 vorteilhaft an.

Durch die in Fig. 1 dargestellte Ausbildung des erfindungsgemäßen Systems zur Abdichtung eines Rohrleitungssystems ist eine sehr verlässliche Abdichtung durch den fluidgefüllten Schlauch 1 im Bereich der Glockenmuffe 7 mit Phase 8 gegeben, die durch die Realisierung der Manschette 5 mit Federring 5a auch dauerhaft vor Beschädigung durch vorbei geförderte, gefährliche Gegenstände geschützt ist. Damit ist eine besonders sichere und dauerhafte Abdichtung eines Rohrleitungssystem durch das erfindungsgemäße System gegeben.

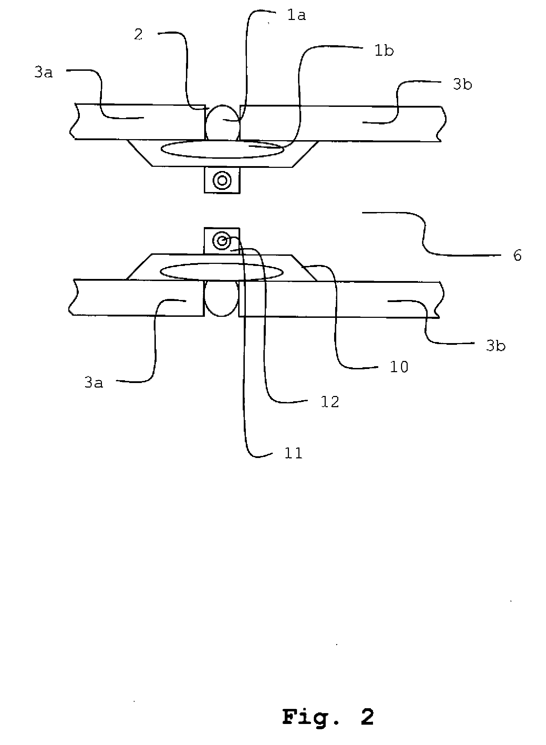

In der Fig. 2 ist eine andere beispielhafte Ausbildung des erfindungsgemäßen Systems zur Abdichtung eines Rohrleitungssystems dargestellt. Die beiden Rohrenden 3a, 3b stoßen dabei mit gleichem Durchmesser, einen Spalt 2 bildend, aneinander. Werden die beiden Rohre des Rohrleitungssystems nicht genau in gleicher Richtung und ohne Versatz aneinander gefügt, entsteht ein keilförmiger Spalt 2, der regelmäßig zu Problemen und störenden, nicht akzeptablen Undichtigkeiten führt.

In diesem Fall hat es sich bewährt, in den Bereich des Spaltes 2 zur Abdichtung den erfindungsgemäßen Schlauch 1 des erfindungsgemäßen Systems zur Abdichtung eines Rohrleitungssystems einzubringen. In Fig. 2 ist dieser Schlauch 1 in fluidgefülltem Zustand, also im abgedichteten Rohrleitungssystem, dargestellt. Der Schlauch 1 aus vulkanisierbarem Material zeigt zwei fluidgefüllte Kammern 1a, 1b. Die Kammer 1a ist so angeordnet, dass sie im Spalt 2 zwischen den beiden Rohrenden 3a, 3b zu liegen kommt und diese lateral gegeneinander abdichtet, während die zweite Kammer 1b inwändig im Innenraum 6 des Rohrleitungssystems angeordnet ist. Die Kammer 1b ist dabei bandförmig ausgebildet und so mit Fluid gefüllt, dass ein bandförmiger Ring gebildet ist, der sich an die Innenseite der Rohrenden 3a, 3b flächig anlegt und durch radialen Druck nach außen aufgrund der Fluidfüllung die Innenwand der Rohrleitungsenden 3a, 3b dicht abschließt. Durch diese flächigen, ringförmigen Abdichtungen mit Hilfe der bandförmigen Kammer 1b ist eine zusätzliche Abdichtung in radialer Richtung zusätzlich zu der lateralen Abdichtung im Spalt 2 zwischen den beiden Rohrenden 3a, 3b gegeben. Durch diese Kombination der beiden Abdichtungen durch die beiden Kammern 1a, 1b ist eine sehr verlässliche und sichere Abdichtung des Rohrleitungssystems gegeben.

Im nicht fluidgefüllten Zustand lassen sich die beiden Kammern 1a, 1b und damit der Schlauch 1 auf einfache Weise sehr kompakt an den Ort des undichten Rohrleitungssystems bringen und dort die Kammer 1a in den Spalt 2 einbringen. Anschließend wird zuerst die Kammer 1a mit Fluid gefüllt und anschließend die zweite Kammer 1b, was eine sehr sichere Positionierung und damit eine verlässliche doppelte Abdichtung gewährleistet. Der Schlauch 1 zeigt im fluidgefüllten Zustand einen T-förmigen Querschnitt, der durch die beiden miteinander verbundenen Kammern 1a, 1b gegeben ist.

Um eine mechanische oder auch chemische Beschädigung durch aggressive geförderte Substanzen zu verhindern, ist der durch die Kammern 1a, 1b gebildete Schlauch inwändig durch einen Schutzring 10 aus Edelstahl gesichert. Der Schutzring 10 umschließt den Schlauch 1 auf dessen Innenseite. Auf der Innenseite des Schutzrings 10 sind in Führungen 12 verlaufenden Bolzen 11 angeordnet, wobei die Führungen 12 durch Laschen mit kreisförmigen Führungslöchern 12 gebildet werden. In diese Führungen 12 werden mehrere segmentübergreifende Bolzen 11 eingebracht, die das lagerichtige Aneinanderfügen der Segmente gewährleisten und zusätzlich die verbundenen Segmente vor einem ungewollten Öffnen der Segmentverbindung schützen. Im verbundenen Zustand bilden diese Segmente den geschlossenen Sicherungsring 10. Die Sicherung gegen ungewolltes Öffnen wird durch Splinte, die in Ausnehmungen der Bolzen 11 eingebracht werden und die ein ungewolltes Verschieben der Bolzen 11 verhindern, gewährleistet.

Durch diese beispielhafte Ausbildung des erfindungsgemäßen Systems zur Abdichtung eines Rohrleitungssystems ist einerseits eine sehr sicher abdichtende Realisierung gegeben und in Verbindung mit dem Sicherungsring 10 des Systems ist auch eine sehr dauerhafte Abdichtung gewährleistet.

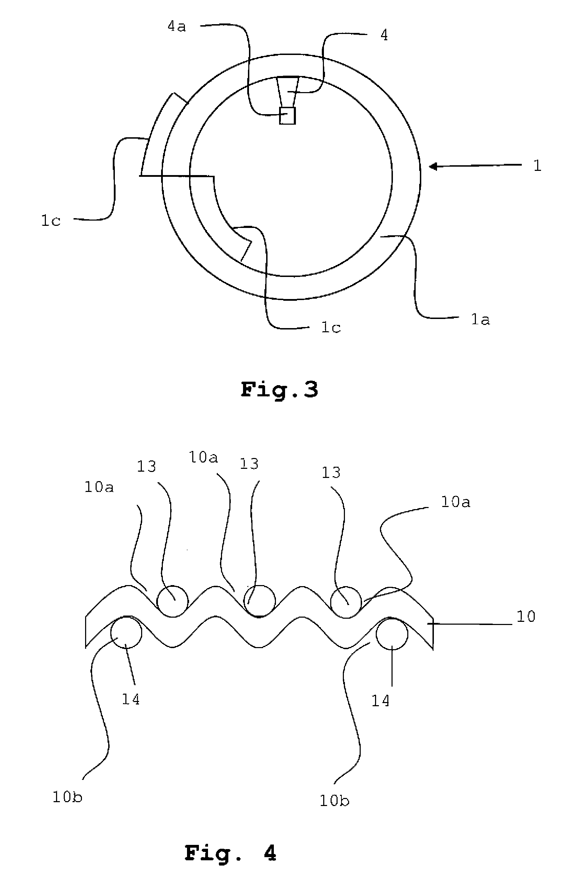

In Fig. 3 ist eine schematische Darstellung eines beispielhaften, zu einem geschlossenen Ring verbundenen Schlauches 1 aus einem vulkanisierbaren Material aus Kautschuk dargestellt. Der Schlauch 1 ist hier im fluidgefüllten Zustand dargestellt. Der Innenraum des Schlauches, die Kammer 1a, ist fluidgefüllt. Das Fluid in der Kammer 1a wurde über das Zuführelement 4 eingebracht, das mit einem Rückschlagventil 4a versehen ist. Hierdurch ist ein einfaches und verlässliches, wenig aufwändiges Einbringen des Fluids zur Vergrößerung des Volumens des Schlauches 1 gegeben.

Um dem Schlauch 1 die ringförmige Gestalt zu geben, wurde der zuerst nicht zu einem Ring geschlossene Schlauch, der an beiden Enden Schlauchenden 1c in der Art einer Endfläche ohne integrierte Kammer aufweist, zu einem Ring verbunden. Diese Schlauchenden 1c haben in dieser beispielhaften Ausbildung eine flächige Gestalt und kragen über die geschlossene Kammer 1a, welche fluidgefüllt werden kann, hinaus.

Die Schlauchenden 1c werden mit Hilfe eines Vulkanisiermittels mit dem jeweils anderen Ende des Schlauches 1 und hier im Bereich der Kammer 1a des anderen Schlauchendes vulkanisierend und damit ähnlich eines Verschweißens eines Kunststoffes verbunden. Durch diese Art der Verbindung entsteht eine sehr sichere und dauerhafte Verbindung der Schlauchenden 1c, die nun insgesamt die Gestalt eines ringförmigen Schlauches 1 bestimmen. Durch diese Ausbildung des Schlauches 1 lässt sich je nach Bedarf der passende Schlauch auf relativ einfache Weise an den Ort des abzudichtenden Rohrleitungssystems bringen, dort nach Auswahl des passenden Schlauches 1 dieser zu einem geschlossenen Ring verbinden und in den Spalt 2 oder in den Bereich des Spaltes 2 einbringen.

Auch lässt sich mit Hilfe der Vulkanisierfähigkeit des Materials des Schlauches 1 die Länge der Kammer 1a und damit die Länge des Ringes bzw. dessen Ringdurchmesser an die jeweilige Situation anpassen, so dass die Anzahl der verschiedenen grundsätzlich zur Verfügung gestellten Längen des Schlauches 1 erheblich reduziert werden kann. Dies führt zu einer vereinfachten Logistik und damit zu einem einfacher zu handhabenden erfindungsgemäßen System zur Abdichtung eines Rohrleitungssystems.

Das erfindungsgemäße System zur Abdichtung besticht durch die verlässliche und dauerhafte Abdichtung eines Rohrleitungssystems insbesondere im Bereich der Rohrenden. Zusätzlich erweist es sich in seiner Handhabung als besonders einfach und wenig aufwändig.

Der Figur 4 ist ein beispielhafter Schutzring 10 zu entnehmen. Dieser ist im Querschnitt wellenförmig aus Schiffsstahl ausgebildet. Durch die Wellenstruktur ist eine besonders stabile Ausbildung des Schutzringes 10 geschaffen, die sich durch ein geringes Gewicht und dadurch eine besonderes vorteilhafte Einsatzmöglichkeit schafft. In den Wellentälern 10a auf der Innenseite des Schutzringes 10 sind mehrere flexible Hohlringe 13 angeordnet, die mit inertem Gas gefüllt sind und dadurch im Radius zunehmen und den Schutzring 10 radial erweitern und damit den Schutzring 10 gegen das abzudichtende Rohrleitungssystem dichtend anpresst. Weiterhin zeigt Figur 4 zwei auf der Außenseite des Schutzrings 10 in den außenliegenden Wellentäler 10b angeordnete ringförmige Schläuche 14, die mit quellfähigem feinkörnigem Material gefüllt sind, das durch eingeführtes Wasser zum Quellen angeregt wird, und dadurch das erfindungsgemäße System erfolgreich abdichtet. Durch das quellfähige feinkörnige Material ist es möglich auch im gequollenen Zustand eine ausreichende Flexibilität der Schläuche 14 zu ermöglichen und dadurch eine Anpassung an verschiedene äußere Gegebenheiten zu gewährleisten. Der dargestellte beispielhafte Schutzring gewährleistet eine besonders gute Dichtungsleistung.

## Patentansprüche

1. Verfahren zur Abdichtung eines Rohrleitungssystems mit einem fluiddichten Schlauch (1) mit den Schritten:
Einbringen des fluiddichten Schlauches (1) in einen Spalt (2) einer Muffe (7) zwischen zwei gegeneinander abzudichtende Rohre (3a, 3b) des abzudichtenden Rohrleitungssystems, wobei das innere Rohr (3a) der Muffe (7) ein Rohrende mit einer am Außendurchmesser angeordneten Phase (8) zeigt,
Einbringen des Fluides in den Schlauch (1) mit einer Pumpe zum Fördern des Fluides über ein mit einem Ventil (4a) versehenen Zuführelement des Schlauches,
sodass der Schlauch (1) mit dem Fluid gefüllt wird bis er sich an die Wände des Spaltes (2) anpresst und diesen abdichtet.

2. System zur Abdichtung eines Rohrleitungssystems mit einem fluiddichten Schlauch (1) zur Einbringung in einen abzudichtenden Spalt (2) zwischen zwei Rohren (3a, 3b) des abzudichtenden Rohrleitungssystems, wobei der Schlauch (1) mit einem ein Ventil (4a) enthaltende Zuführelement (4) zum Einbringen des Fluides in den Schlauch (2) versehen ist,
und mit einer Pumpe zum Fördern des Fluides, die mit dem Zuführelement (4) verbindbar ist, wobei das Fluid in den Schlauch (1) eingebracht wird, sich dabei ausdehnt und sich abdichtend gegen die Wände des Spaltes (2) anpresst und **dadurch gekennzeichnet, dass** die gegeneinander
abzudichtenden Rohre (3a, 3b) eine Muffe (7) bilden, dessen inneres Rohr (3a) ein Rohrende mit einer am Außendurchmesser angeordneten Phase (8) zeigt.

3. System zur Abdichtung eines Rohrleitungssystems nach Anspruch 2,
**dadurch gekennzeichnet, dass** der Schlauch (2) vulkanisierbares oder verschweißbares Material enthält.

4. System zur Abdichtung eines Rohrleitungssystems nach Anspruch 3,
**dadurch gekennzeichnet, dass** der Schlauch (2) durch Vulkanisierung oder Verschweißen zu einem Ring verbindbar ist.

5. System zur Abdichtung eines Rohrleitungssystems nach einem der Ansprüche 2 bis 4,
**dadurch gekennzeichnet, dass** der Schlauch (2) aus einem Material mit Gewebeeinlage aus Textil oder Metall gebildet ist.

6. System zur Abdichtung eines Rohrleitungssystems nach Anspruch 5,
**dadurch gekennzeichnet, dass** die Gewebeeinlage mehrschichtig ausgebildet ist.

7. System zur Abdichtung eines Rohrleitungssystems nach einem der vorstehenden Ansprüche 2 bis 6,
**dadurch gekennzeichnet, dass** der Schlauch (2) zur Einbringung in den Spalt (1) ausgebildet und vorgesehen ist.

8. System zur Abdichtung eines Rohrleitungssystems nach Anspruch 7,
**dadurch gekennzeichnet, dass** es eine insbesondere federnde Manschette (5) aufweist, die in den Spalt (1) zwischen den Schlauch (2) und dem Innenraum (6) des Rohrleitungssystems einbringbar ausgebildet ist.

9. System zur Abdichtung eines Rohrleitungssystems nach einem der vorstehenden Ansprüche 2 bis 6,
**dadurch gekennzeichnet, dass** der Schlauch (2) zur inwändigen Anordnung im Bereich des Spalt (1) so ausgebildet und vorgesehen ist, dass der Schlauch (2) bandförmig mit Breite größer als 10 cm ausgebildet ist und im fluidgefüllten Zustand den Spalt (1) flächig inwändig bedeckt.

10. System zur Abdichtung eines Rohrleitungssystems nach einem der vorstehenden Ansprüche 2 bis 9,
**dadurch gekennzeichnet, dass** der Schlauch (2) mehrere sich in Längsrichtung des Schlauches (2) erstreckende Kammern (1a, 1b) aufweist.

11. System zur Abdichtung eines Rohrleitungssystems nach einem der vorstehenden Ansprüche 2 bis 10,
**dadurch gekennzeichnet, dass** die gegeneinander abzudichtenden Rohre eine Glockenmuffe (7) bilden, mit Kunststoffdichtung (9) zwischen der Glocke (7) und zugeordnetem anderen Rohrende (3b).

12. System zur Abdichtung eines Rohrleitungssystems nach einem der vorstehenden Ansprüche 2 bis 11,
**dadurch gekennzeichnet, dass** das System einen Schutzring (10) enthält zur inwändigen Anordnung im Bereich des mit dem Schlauch (2) versehenden Rohrspaltes (1).

13. System zur Abdichtung eines Rohrleitungssystems nach Anspruch 12,
**dadurch gekennzeichnet, dass** der Schutzring (10) aus mehreren Segmenten gebildet ist, die miteinander zum Schutzring (10) mit einem Außendurchmesser entsprechend dem Innendurchmesser des abzudichtenden Ringspaltes (1) verbindbar sind.

14. System zur Abdichtung eines Rohrleitungssystems nach Anspruch 13,
**dadurch gekennzeichnet, dass** die Segmente mittels insbesondere verschieblichen Bolzen (11) zu dem Schutzring (10) verbindbar sind.

15. System zur Abdichtung eines Rohrleitungssystems nach Anspruch 14,
**dadurch gekennzeichnet, dass** die Bolzen (11) in einer Führung (12) achsial geführt sind und im verbundenen Zustand die Führung durch eine gemeinsame Führung an zwei verschiedenen Segmenten gebildet wird.

16. System zur Abdichtung eines Rohrleitungssystems nach Anspruch 14 oder 15,
**dadurch gekennzeichnet, dass** die Bolzen (11) im verbundenen Zustand vor ungewolltem Öffnen gesichert sind.

17. System zur Abdichtung eines Rohrleitungssystems nach einem der vorstehenden Ansprüche 7 oder 12 bis 16,
**dadurch gekennzeichnet, dass** der Schutzring (10), einzelne Segmente des Schutzrings (10) und/oder die Manschette (5) vorgespannt ist.

18. System zur Abdichtung eines Rohrleitungssystems nach einem der vorstehenden Ansprüche 7 oder 12 bis 17,
**dadurch gekennzeichnet, dass** die Manschette (5)
und/oder der Schutzring (10) im Wesentlichen aus Stahl insbesondere Schiff- oder Edelstahl wie V4A-Stahl gebildet ist.

19. System zur Abdichtung eines Rohrleitungssystems nach einem der vorstehenden Ansprüche 12 bis 18,
**dadurch gekennzeichnet, dass** der Schutzring (10) im Querschnitt wellenförmig ausgebildet ist.

20. System zur Abdichtung eines Rohrleitungssystems nach Anspruch 19,
**dadurch gekennzeichnet, dass** in einem oder in mehreren der Wellentäler des Schutzrings (10) zu einem Ring verbundene mit einem Fluid füllbare Körper angeordnet sind.

21. System zur Abdichtung eines Rohrleitungssystems nach einem der vorstehenden Ansprüche 2 bis 20,
**dadurch gekennzeichnet,**
**dass** das Fluid ein inertes Gas insbesondere Stickstoff oder Kohlendioxid oder eine nichtreaktive Flüssigkeit insbesondere flüssiges Wasser darstellt.

## Claims

1. Method of sealing a pipeline system with a fluid-tight hose (1) comprising the steps:
introducing the fluid-tight hose (1) into a gap (2) of a socket (7) between two pipes (3a, 3b) of the pipeline system to be sealed that are to be sealed relative to one another, the inner pipe (3a) of the socket (7) displaying a pipe end with a phase (8) arranged at the outside diameter, and
introducing the fluid into the hose (1) with a pump for delivering the fluid via a feed element of the hose provided with a valve (4a) so that the hose (1) is filled with the fluid until it presses against the walls of the gap (2) and seals it.

2. System for sealing a pipeline system, comprising a fluid-tight hose (1) designed to be introduced into a gap (2) to be sealed between two pipes (3a, 3b) of the pipeline system to be sealed, the hose (1) being provided with a feed element (4) containing a valve (4a) for introducing the fluid into the hose (1),
and comprising a pump for delivering the fluid that can be connected to the feed element (4), the fluid being introduced into the hose (1), where it expands and is pressed in a sealing manner against the walls of the gap (2), and the pipes (3a, 3b) to be sealed relative to one another form a socket (7), the inner pipe (3a) of which displays a pipe end with a phase (8) arranged at the outside diameter.

3. System for sealing a pipeline system according to claim 2, **characterised in that** the hose (1) contains material that can be vulcanised or welded.

4. System for sealing a pipeline system according to claim 3, **characterised in that** the hose (1) can be connected to form a ring by vulcanising or welding.

5. System for sealing a pipeline system according to one of claims 2 to 4, **characterised in that** the hose (1) is formed of a material with a fabric insert of textile material or metal.

6. System for sealing a pipeline system according to claim 5, **characterised in that** the fabric insert is multi-layered.

7. System for sealing a pipeline system according to one of the preceding claims 2 to 6, **characterised in that** the hose (1) is designed and intended to be introduced into the gap (2).

8. System for sealing a pipeline system according to claim 7, **characterised in that** it has an, in particular, resilient sleeve (5) designed in such a manner that it can be introduced into the gap (2) between the hose (1) and the interior (6) of the pipeline system.

9. System for sealing a pipeline system according to one of the preceding claims 2 to 6, **characterised in that** the hose (1) is designed and intended to be arranged on the inside wall in the region of the gap (2) in such a manner that the hose (1) is strip-shaped with a width greater than 10 cm and, in the fluid-filled state, covers the surface area of the gap (2) on the inside wall.

10. System for sealing a pipeline system according to one of the preceding claims 2 to 9, **characterised in that** the hose (1) has a plurality of chambers (1 a, 1 b) extending in the longitudinal direction of the hose (1).

11. System for sealing a pipeline system according to one of the preceding claims 2 to 10, **characterised in that** the pipes to be sealed relative to one another form a bell-shaped socket (7), with a plastic seal (9) between the bell (7) and the associated other pipe end (3b).

12. System for sealing a pipeline system according to one of the preceding claims 2 to 11, **characterised in that** the system contains a protective ring (10) designed to be arranged on the inside wall in the region of the pipe gap (2) provided with the hose (1).

13. System for sealing a pipeline system according to claim 12, **characterised in that** the protective ring (10) is formed of a plurality of segments that can be connected together to form the protective ring (10) with an outside diameter corresponding to the inside diameter of the annular gap (2) to be sealed.

14. System for sealing a pipeline system according to claim 13, **characterised in that** the segments can be connected to form the protective ring (10) by means of, in particular, displaceable bolts (11).

15. System for sealing a pipeline system according to claim 14, **characterised in that** the bolts (11) are guided axially in a guide (12) and, in the connected state, the guide is formed by a common guide on two different segments.

16. System for sealing a pipeline system according to claim 14 or claim 15, **characterised in that** the bolts (11) are secured against accidental opening in the connected state.

17. System for sealing a pipeline system according to one of the preceding claims 7 or 12 to 16, **characterised in that** the protective ring (10), individual segments of the protective ring (10) and/or the sleeve (5) is/are pretensioned.

18. System for sealing a pipeline system according to one of the preceding claims 7 or 12 to 17, **characterised in that** the sleeve (5) and/or the protective ring (10) is/are formed substantially of steel, in particular ship steel or stainless steel, such as V4A steel.

19. System for sealing a pipeline system according to one of the preceding claims 12 to 18, **characterised in that** the protective ring (10) has a wave-like cross section.

20. System for sealing a pipeline system according to claim 19, **characterised in that** bodies that can be filled with a fluid and are connected to form a ring are arranged in one or more of the wave troughs of the protective ring (10).

21. System for sealing a pipeline system according to one of the preceding claims 2 to 20, **characterised in that** the fluid is an inert gas, in particular nitrogen or carbon dioxide, or a non-reactive liquid, in particular liquid water.

## Revendications

1. Procédé d'étanchéification d'un système de conduites au moyen d'un tuyau (1) étanche aux fluides, selon les étapes suivantes :
introduction du tuyau (1) étanche aux fluides dans un interstice (2) créé par un manchon (7) et deux conduites (3a, 3b) à étanchéifier l'une vis-à-vis de l'autre du système de conduites à étanchéifier, la conduite intérieure (3a) du manchon (7) présentant un chanfrein (8) sur le diamètre extérieur de son extrémité,
introduction d'un fluide dans le tuyau (1) au moyen d'une pompe d'amenée du fluide par l'intermédiaire d'un élément d'alimentation muni d'un clapet (4a), de manière à remplir le tuyau (1) de fluide jusqu'à ce qu'il se presse contre les parois de l'interstice (2) et étanchéifie ces dernières.

2. Système d'étanchéification d'un système de conduites au moyen d'un tuyau (1) étanche aux fluides, à introduire dans un interstice (2) à étanchéifier entre deux conduites (3a, 3b) du système de conduites à étanchéifier, le tuyau (1) étant muni d'un élément d'alimentation (4) muni d'un clapet (4a) pour introduire le fluide dans le tuyau (1),
et au moyen d'une pompe d'amenée du fluide raccordable à l'élément d'alimentation (4), le tuyau (1) se dilatant lors de l'introduction du fluide et se pressant de manière étanche contre les parois de l'interstice (2), les conduites (3a, 3b) à étanchéifier l'une vis-à-vis de l'autre formantes un manchon (7) dont la conduite intérieure (3a) présente un chanfrein (8) sur le diamètre extérieur de son extrémité.

3. Système d'étanchéification d'un système de conduites selon la revendication 2, **caractérisé en ce que** le tuyau (1) contient un matériau vulcanisable ou thermosoudable.

4. Système d'étanchéification d'un système de conduites selon la revendication 3, **caractérisé en ce que** le tuyau (1) peut être vulcanisé ou thermosoudé pour former un anneau.

5. Système d'étanchéification d'un système de conduites selon l'une des revendications 2 à 4, **caractérisé en ce que** le tuyau (1) se compose d'un matériau contenant une armature tissée en textile ou en métal.

6. Système d'étanchéification d'un système de conduites selon la revendication 5, **caractérisé en ce que** l'armature tissée comporte plusieurs couches.

7. Système d'étanchéification d'un système de conduites selon l'une des revendications 2 à 6, **caractérisé en ce que** le tuyau (1) est formé et prévu pour être introduit dans l'interstice (2).

8. Système d'étanchéification d'un système de conduites selon la revendication 7, **caractérisé en ce qu'**il présente un anneau (5), en particulier élastique, formé de manière à pouvoir être introduit dans l'interstice (2) entre le tuyau (1) et l'intérieur (6) du système de conduites.

9. Système d'étanchéification d'un système de conduites selon l'une des revendications 2 à 6, **caractérisé en ce que** le tuyau (1) destiné à s'appliquer contre les parois intérieures dans la zone de l'interstice (2) est en forme de bande d'une largeur supérieure à 10 cm, et prévu pour couvrir de manière plane, une fois rempli de fluide, les parois intérieures de l'interstice (2).

10. Système d'étanchéification d'un système de conduites selon l'une des revendications 2 à 9, **caractérisé en ce que** le tuyau (1) présente plusieurs chambres (1a, 1 b) qui s'étendent dans sa direction longitudinale.

11. Système d'étanchéification d'un système de conduites selon l'une des revendications 2 à 10, **caractérisé en ce que** les conduites à étanchéifier l'une vis-à-vis de l'autre forment un manchon (7) en cloche, un joint en matière synthétique (9) étant présent entre la cloche (7) et l'extrémité de conduite (3b) associée.

12. Système d'étanchéification d'un système de conduites selon l'une des revendications 2 à 11, **caractérisé en ce qu'**il comporte une bague protectrice (10) destinée à s'appliquer contre les parois intérieures dans la zone de l'interstice (2) pourvu du tuyau (1).

13. Système d'étanchéification d'un système de conduites selon la revendication 12, **caractérisé en ce que** la bague protectrice (10) est formée de plusieurs segments qui peuvent être reliés entre eux pour former la bague protectrice (10) en présentant un diamètre extérieur correspondant au diamètre intérieur de l'interstice (2) annulaire à étanchéifier.

14. Système d'étanchéification d'un système de conduites selon la revendication 13, **caractérisé en ce que** les segments peuvent être reliés pour former la bague protectrice (10), notamment au moyen de boulons (11) déplaçables.

15. Système d'étanchéification d'un système de conduites selon la revendication 14, **caractérisé en ce que** les boulons (11) sont guidés axialement dans un guide (12), et **en ce que**, dans l'état lié, le guide est formé par un guide commun à deux segments différents.

16. Système d'étanchéification d'un système de conduites selon la revendication 14 ou 15, **caractérisé en ce que** les boulons (11), dans l'état lié, sont protégés de toute ouverture involontaire.

17. Système d'étanchéification d'un système de conduites selon l'une des revendications 7 ou 12 à 16, **caractérisé en ce que** la bague protectrice (10), divers segments de la bague protectrice (10) et/ou l'anneau (5) sont précontraints.

18. Système d'étanchéification d'un système de conduites selon l'une des revendications 7 ou 12 à 17, **caractérisé en ce que** l'anneau (5) et/ou la bague protectrice (10) se composent essentiellement d'acier, notamment d'acier pour bateau ou d'acier fin, tel que la nuance V4A.

19. Système d'étanchéification d'un système de conduites selon l'une des revendications 12 à 18, **caractérisé en ce que** la bague protectrice (10) présente une section ondulée.

20. Système d'étanchéification d'un système de conduites selon la revendication 19, **caractérisé en ce que** des corps remplissables par un fluide et reliés pour former un anneau sont disposés dans un ou plusieurs creux de la bague protectrice (10) ondulée.

21. Système d'étanchéification d'un système de conduites selon l'une des revendications 2 à 20, **caractérisé en ce que** le fluide est un gaz inerte, notamment de l'azote ou du dioxyde de carbone, ou un liquide non réactif, notamment de l'eau à l'état liquide.
